# EUROPÄISCHE PATENTSCHRIFT

(11) **EP 2 627 470 B1**
(45) Veröffentlichungstag und Bekanntmachung des Hinweises auf die Patenterteilung: **01.02.2017**
(21) Anmeldenummer: 11768007.4
(22) Anmeldetag: 12.10.2011
(51) Int. Cl.: B23K 9/20, B23K 11/00, B23K 11/14, B23K 31/02, B23K 35/02, B60R 1/02, F16B 37/06

(54) **BEFESTIGUNGSSYSTEM FÜR ANBAUTEILE AN EINEM FAHRZEUG MIT PROFILARTIGEM ANSCHLUSSTEIL ; FAHRZEUG MIT EINEM SOLCHEN BEFESTIGUNGSSYSTEM**
FASTENING SYSTEM FOR ADD-ON PARTS ON A VEHICLE HAVING A PROFILE-LIKE CONNECTION PART; VEHICLE HAVING SUCH A FASTENING SYSTEM
SYSTÈME DE FIXATION POUR PIÈCES À MONTER SUR UN VÉHICULE, COMPRENANT UNE PIÈCE DE CONNEXION PROFILÉE; VÉHICULE POURVU D'UN TEL SYSTÈME DE FIXATION

(30) Priorität: 16.10.2010 DE 102010048737
(43) Veröffentlichungstag der Anmeldung: 21.08.2013
(73) Patentinhaber: MEKRA Lang GmbH & Co. KG, 91465 Ergersheim (DE)
(72) Erfinder: REBELEIN, Christian, 91580 Petersaurach (DE); SCHMIDT, Achim, 97258 Ippesheim (DE); LANG, Werner, 91465 Ergersheim (DE); POPP, Albrecht, 91629 Weihenzell (DE)
(74) Vertreter: Winter, Brandl, Fürniss, Hübner, Röss, Kaiser, Polte - Partnerschaft mbB
(86) Internationale Anmeldenummer: PCT/EP2011/067792
(87) Internationale Veröffentlichungsnummer: WO 2012/049203

(56) Entgegenhaltungen:
- EP-A1- 1 731 368
- JP-A- 5 042 433
- JP-A- 8 338 414
- JP-A- 2003 117 660
- JP-A- 2009 154 792
- US-A- 2 127 685

## Beschreibung

Es wird ein Befestigungssystem für eine spielfreie Befestigung von Anbauteilen an einem Fahrzeug gemäß dem Oberbegriff des Anspruchs 1 (siehe, z.B., JP2009/154792 A) Weiter wird ein Fahrzeug (siehe Anspruch 9) angegeben, das eine Einrichtung für indirekte Sicht umfasst, die mittels eines solchen Befestigungssystems an dem Fahrzeug montiert ist.

Bekannt sind Lösungen, bei denen der Fuß des zu befestigenden Anbauteils direkt an das Fahrzeug mittels einer Schraubverbindung angeschraubt wird. Weiterhin sind Lösungen bekannt, den Fuß des zu befestigenden Anbauteils direkt mittels einer Schweißverbindung oder auch Klebeverbindung mit dem Fahrzeug zu verbinden.

Lösungen, bei denen der Fuß des zu befestigenden Bauteils direkt an das Fahrzeug geschraubt wird sind insofern nachteilig, dass sie eine aufwändige Vorbereitung des Fahrzeugs voraussetzen. Beispielsweise müssen die zur Aufnahme der Schrauben erforderlichen Gewinde bereitgestellt werden. Darüber hinaus ist zum Erreichen einer spielfreien Zentrierung eine genaue Abstimmung der Geometrie der Kontaktfläche des Fußes des zu befestigenden Anbauteils erforderlich.

Lösungen, bei denen der Fuß des zu befestigenden Anbauteils direkt mittels Schweißverbindung mit dem Fahrzeug verbunden wird, weisen Nachteile auf, da ein auf diese Weise verbundenes Anbauteil nicht mehr zerstörungsfrei vom Fahrzeug entfernt werden kann. Weiterhin ist für eine derartige Lösung eine Schweißbarkeit des Fußes des zu befestigenden Anbauteils erforderlich. Weiterhin ist eine aufwändige Schweißvorbereitung am Fuß des Anbauteils notwendig, damit sich nach Anlegen des Fußes an das Fahrzeug günstige Kontaktflächen für die Anbringung der Schweißnaht ergeben.

Ein Befestigungssystem der in Frage stehenden Art, von welchem die vorliegende Erfindung ausgeht, ist aus der EP 1 731 368 A1 bekannt.

Es ist daher Aufgabe der Erfindung, ein Befestigungssystem für Anbauteile an Fahrzeugen anzugeben, das eine einfache Montage und Demontage von Anbauteilen an Fahrzeugen ermöglicht. Weiter ist es Aufgabe der Erfindung, ein mit einem solchen Befestigungssystem versehenes Fahrzeug anzugeben.

Die Lösung dieser Aufgaben erfolgt durch die Merkmale des Anspruchs 1 bzw. 9.

Das Befestigungssystem umfasst ein Anschlussteil, das am Fahrzeug anliegt und einen Fuß, der mit dem Anbauteil verbunden ist. Das Anschlussteil ist als Profil ausgebildet, dessen Außenmantelfläche zumindest abschnittsweise der Mantelfläche eines Prismas mit der Grundfläche eines regelmäßigen Vielecks mit wenigstens einem von 90° abweichenden Innenwinkel entspricht. Weiterhin weist das Anschlussteil wenigstens eine von einer Seitenfläche zugängliche Aufnahme für ein Verbindungsmittel auf. Das Anschlussteil liegt mit einer Seitenfläche am Fahrzeug an. Auf diese Weise bilden sich zwischen dem Fahrzeug und den an die anliegende Seitenfläche angrenzenden Seitenflächen jeweils Kerben aus, in die direkt eine Schweißnaht gelegt werden kann. Der Fuß des Anbauteils weist eine trapezförmige Nut auf, in welcher Seitenflächen des Anbauteils wenigstens teilweise bündig zum liegen kommen. Weiterhin weist der Fuß wenigstens eine durchgehende Öffnung auf, durch die ein Verbindungsmittel geführt werden kann.

Gemäß einer bevorzugten Ausführungsform wird zur Befestigung des Anbauteils an das Fahrzeug zunächst das Anschlussteil mit einer Seitenfläche an das Fahrzeug angelegt. Weiterhin werden in den sich ergebenden Kerben zwischen der Fahrzeugoberfläche und den an die anliegende Seitenfläche angrenzenden Seitenflächen des Anschlussteils Schweißnähte angebracht. Der Fuß des Anbauteils wird nun so an dem Anschlussteil angesetzt, dass die Schenkelflächen der trapezförmigen Nut an Seitenflächen des Anschlussteils anliegen und dass die wenigstens eine Öffnung im Fuß und die wenigstens eine Aufnahme für ein Verbindungsmittel im Anschlussteil übereinander zum Liegen kommen. Das wenigstens eine Verbindungsmittel wird nun durch die wenigstens eine Öffnung im Fuß geführt und mit der wenigstens einen Aufnahme in eine reib- und/oder formschlüssige Verbindung gebracht.

Durch die im spitzen Winkel zueinander angeordneten Schenkelflächen der trapezförmigen Nut im Fuß und die bündig daran anliegenden Seitenflächen des Anschlussteils wird eine spielfreie Zentrierung des Fußes an dem Anschlussteil über die Prismenflächen in der Nut bewirkt.

In einer besonders bevorzugten Ausführung ist das Anschlussteil derart ausgebildet, dass seine Außenmantelfläche zumindest abschnittsweise der Mantelfläche eines Prismas mit der Grundfläche eines regelmäßigen Sechsecks entspricht. Vorteilhaft bei dieser Ausgestaltung ist die problemlose Verfügbarkeit der erforderlichen Normstangenhalbzeuge. Dadurch lässt sich das Anschlussteil auf eine sehr günstige Art und Weise durch Abtrennung eines Abschnitts von im Handel erhältlicher genormter Standardware (Stangenhalbzeug) herstellen. Der Prozess der Einbringung des erforderlichen Gewindes in das Anschlussteil und des Abtrennung vom Stangenhalbzeug ist einfach und problemlos automatisierbar.

Vorteilhaft ist die einfache Herstellbarkeit der Verbindung zwischen Fahrzeug und Anbauteil. Hierbei wird der erfinderischen Ausgestaltung der Außenmantelfläche des Anschlussteils eine tragende Rolle zuteil: Die dem Fahrzeug zugewandten Flächen sind derart ausgeprägt, dass sich ohne zusätzlichen Aufwand zwischen dem Fahrzeug und dem Anschlussteil eine sehr günstige Kerbe zur Anbringung einer Schweißnaht einstellt. Es ist also kein zusätzlicher Aufwand für eine Schweißvorbereitung erforderlich. Darüber hinaus sind am Anschlussteil keinerlei fahrzeugabhängigen Konturanpassungen notwendig, so dass die Verbindung mit dem beschriebenen Anschlussteil an nahezu jeder beliebigen metallischen Fahrzeugoberfläche realisiert werden kann. Die dem Fahrzeug abgewandten Flächen sind nun so ausgebildet, dass eine sehr vorteilhafte Zentrierung des Fußes des Anbauteils über ein Prisma ermöglicht wird. Diese Art der Zentrierung erweist sich als robust gegenüber Fertigungsabweichungen.

Weitere Einzelheiten, Merkmale und Vorteile der Erfindung ergeben sich aus der nachfolgenden Beschreibung einer beispielhaften Ausführungsform anhand der Zeichnung.

Es zeigt:
- Fig. 1: eine Schnittdarstellung der beispielhaften Ausführungsform des Befestigungssystems, und
- Fig. 2: eine perspektivische Darstellung des Anschlussteils.

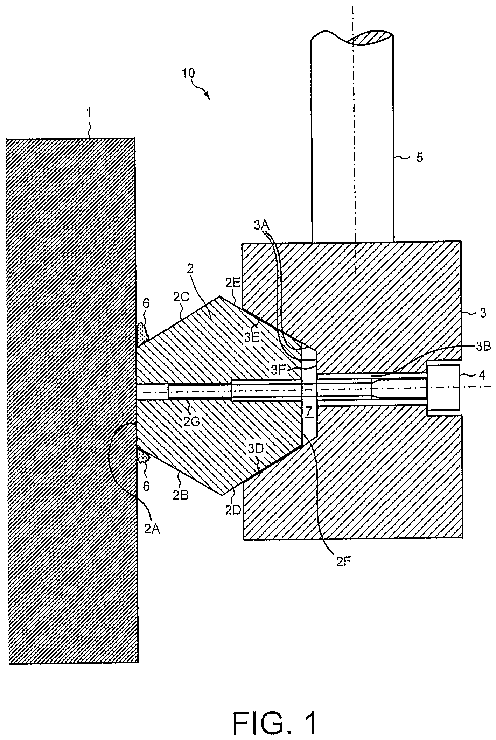

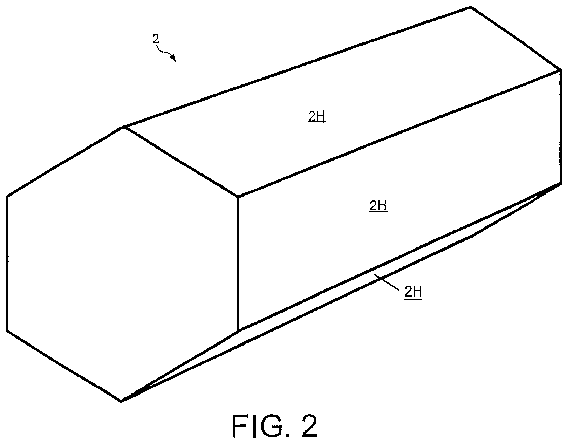

Die beispielhafte Ausführungsform des Befestigungssystems nach Fig. 1 umfasst ein Anschlussteil 2, das fest mit einer Oberfläche eines Fahrzeugs 1 verbunden ist, und einen Fuß 3, der Teil eines Anbauteils 5 ist. Das Anbauteil 5 ist beispielsweise eine Einrichtung für indirekte Sicht und insbesondere ein Fahrzeugspiegel. Der Fuß 3 des Anbauteils 5 kann starr oder durch ein Rastgelenk mit dem Fahrzeugspiegel 5 verbunden sein. Das Anschlussteil 2 gemäß Fig. 2 ist prismenförmig ausgebildet mit einem regelmäßigen Sechseck als Grundfläche und es weist damit sechs Seitenflächen 2a, 2b, 2c, 2d, 2e und 2f auf, die zusammen die Außenmantelfläche 2h des Anschlussteils 2 bilden.

Das Anschlussteil 2 liegt mit einer Seitenfläche 2a am Fahrzeug 1 an. Auf diese Weise bilden sich zwischen dem Fahrzeug 1 und den an die anliegende Seitenfläche 2a angrenzenden Seitenflächen 2b, 2c jeweils Kerben aus, in die direkt eine Schweißnaht 6 gelegt werden kann.

Der Fuß 3 des Anbauteils 5 umfasst eine trapezförmige Nut 3a mit im Winkel zueinander angeordneten Schenkelflächen 3d, 3e, die durch eine Basisfläche 3f miteinander verbunden sind. Die zwei Schenkelflächen 3d, 3e liegen an zwei nicht unmittelbar benachbarten Seitenflächen 2d, 2e des Anschlussteils 2 bündig an. Der Fuß 3 mit den beiden Schenkelflächen 3d, 3e ist so ausgestaltet, dass zwischen der Seitenfläche 2f des Anschlussteils 2 und der Basisfläche 3f ein Spalt 7 verbleibt. Auf diese Weise wird die Verbindung zwischen Anschlussteil 2 und Fuß 3 spielfrei und selbst zentrierend. Der Fuß 3 wird symmetrisch zu der Nut 3a und zentral durch die Basisfläche 3f von einer Bohrung 3b durchsetzt. Das Anschlussteil 2 weist eine zentral durch zwei gegenüberliegende Seitenflächen 2a, 2f gehende Gewindebohrung 2g als Aufnahme für eine Schraube 4 auf. Das Anbauteils 5 bzw. der Fuß 3 werden so an dem Anschlussteil 2 angesetzt, dass die Bohrung 3b und die Gewindebohrung 2g übereinander zu Liegen kommen. Die Schraube 4 wird in die Bohrung 3b eingeführt und in der Gewindebohrung 2g verschraubt. Auf diese Weise wird das Anbauteil 5 an dem Fahrzeug 1 auf einfache Weise lösbar befestigt.

### Bezugszeichenliste:

- 1: Fahrzeug
- 2: Anschlussteil
- 2a, 2b, 2c, 2d, 2e, 2f: Seitenflächen
- 2g: Gewindebohrung
- 3: Fuß
- 3a: Nut
- 3b: Bohrung
- 3d, 3e: Schenkelflächen
- 3f: Basisfläche
- 4: Schraube
- 5: Anbauteil
- 6: Schweißnaht
- 7: Spalt

## Patentansprüche

1. Befestigungssystem zur Befestigung eines Anbauteiles (5) an ein Fahrzeug (1), das umfasst:
ein profilartiges Anschlussteil (2) mit einer Außenmantelfläche (2h),
wenigstens ein Verbindungsmittel (4);
einen mit dem Anbauteil (5) verbindbaren Fuß (3),
wobei das Anschlussteil (2) mit einer zur Außenmantelfläche (2h) gehörenden Seitenfläche (2a) am Fahrzeug (1) anliegen kann,
und wobei das Anschlussteil (2) wenigstens eine Aufnahme (2g) zur Herstellung einer Verbindung mit dem Verbindungsmittel (4) aufweist,
**dadurch gekennzeichnet, dass**
der Fuß (3) eine prismenartige Nut (3a) aufweist, an deren Seitenflanken die zu der Außenmantelfläche (2h) gehörenden und dem Fahrzeug abgewandten Seitenflächen (2e), (2f) des Anschlussteils (2) wenigstens teilweise anliegen,
dass das wenigstens eine Verbindungsmittel (4) den Fuß (3) durchsetzt, dass
das wenigstens eine Verbindungsmittel (4) eine form- und oder reibschlüssige Verbindung mit der Aufnahme (2g) des Anschlussteils (3) eingeht,
und dass
die Außenmantelfläche (2h) des Anschlussteils (2) zumindest abschnittsweise der Mantelfläche eines Prismas mit der Grundfläche eines regelmäßigen Vielecks mit wenigstens einem von 90° abweichenden Innenwinkel entspricht.

2. Befestigungssystem nach Anspruch 1, **dadurch gekennzeichnet, dass** das Anschlussteil (2) fest mit dem Fahrzeug (1) verbindbar ist.

3. Befestigungssystem nach Anspruch 1 oder 2, **dadurch gekennzeichnet, dass** das Anbauteil (5) eine Einrichtung für indirekte Sicht für ein Kraftfahrzeug umfasst.

4. Befestigungssystem nach Anspruch 3, **dadurch gekennzeichnet, dass** die Einrichtung für indirekte Sicht ein Fahrzeugspiegel ist.

5. Befestigungssystem nach einem der vorhergehenden Ansprüche, **dadurch gekennzeichnet, dass** das Verbindungsmittel (4) als Schraube ausgebildet ist und die Aufnahme (2g) als Gewinde ausgebildet ist.

6. Befestigungssystem nach einem der vorhergehenden Ansprüche, **dadurch gekennzeichnet, dass** die Außenmantelfläche des Anschlussteils (2) zumindest abschnittsweise der Mantelfläche eines Prismas mit der Grundfläche eines regelmäßigen Sechsecks entspricht.

7. Befestigungssystem nach einem der vorhergehenden Ansprüche, **dadurch gekennzeichnet, dass** das Anschlussteil (2) als rohrförmiges Profil ausgebildet ist.

8. Befestigungssystem nach einem der vorhergehenden Ansprüche, **dadurch gekennzeichnet, dass** das Anschlussteil (2) als Vollprofil ausgebildet ist.

9. Fahrzeug mit wenigstens einer Einrichtung für indirekte Sicht (5), die mit einem Befestigungssystem nach einem der vorhergehenden Ansprüche an dem Fahrzeug (1) befestigt ist.

## Claims

1. A fastening system for fastening an add-on part (5) on a vehicle (1), which comprises:
a profile-like connection part (2) with an outer surface (2h);
at least one connecting element (4);
a base (3) connectible to the add-on part (5),
wherein the connection part (2) can lie against the vehicle (1) with a lateral surface (2a) which belongs to the outer surface (2h),
and wherein the connection part (2) comprises at least one receptacle (2g) for establishing a connection with the connecting element (4)
**characterized in that**:
the base (3) comprises a prismatic groove (3a) on the side flanks of which the lateral surfaces (2e),(2f) of the connection part (2), which belong to the outer surface of the exterior (2h) and are facing away from the vehicle, lie against the vehicle at least partially,
that the at least one connecting element (4) penetrates the base (3)
that the at least one connecting element (4) enters into a positive and/or frictional connection with the receptacle (2g) of the connection part (3),
and that the outer surface of the exterior (2h) of the connection part (2) corresponds at least in some sections to the outer surface of a prism having the base of a regular polygon having at least one interior angle deviating from 90°.

2. The fastening system according to Claim 1, **characterized in that** the connection part (2) is firmly connectible to the vehicle (1).

3. The fastening system according to Claim 1 or 2, **characterized in that** the add-on part (5) comprises a device for indirect view for a motor vehicle.

4. The fastening system according to Claim 3, **characterized in that** the device for indirect view is a vehicle mirror.

5. The fastening system according to any of the preceding Claims, **characterized in that** the connecting element (4) is designed as a screw and the receptacle (2g) is designed as thread.

6. The fastening system according to any of the preceding Claims, **characterized in that** the outer surface of the exterior of the connection part (2) corresponds at least in some sections to the outer surface of a prism having the base of a regular hexagon.

7. The fastening system according to any of the preceding Claims, **characterized in that** the connection part (2) is designed as a tubular profile.

8. The fastening system according to any of the preceding Claims, **characterized in that** the connection part (2) is designed as a solid profile.

9. A vehicle with at least one device for indirect view (5), which is attached to the vehicle (1) with a fastening system according to one of the preceding Claims.

## Revendications

1. Système de fixation pour la fixation d'une partie rapportée (5) au niveau d'un véhicule (1), qui comprend :
une partie de raccordement (2) de type profilé avec une surface enveloppe extérieure (2h),
au moins un moyen de liaison (4) ;
un pied (3) pouvant être relié à la partie rapportée (5),
dans lequel la partie de raccordement (2) peut reposer avec une surface latérale (2a) appartenant à la surface enveloppe extérieure (2h) contre le véhicule (1),
et dans lequel la partie de raccordement (2) présente au moins un logement (2g) pour l'établissement d'une liaison avec le moyen de liaison (4),
**caractérisé en ce que**
le pied (3) présente une rainure de type prisme (3a), contre les flancs latéraux de laquelle reposent au moins en partie les surfaces latérales (2e), (2f) opposées au véhicule et appartenant à la surface enveloppe extérieure (2h),
**en ce que** l'au moins un moyen de liaison (4) traverse le pied (3),
**en ce que** l'au moins un moyen de liaison (4) établit une liaison par complémentarité de formes et/ou par friction avec le logement (2g) de la partie de raccordement (3),
et **en ce que** la surface enveloppe extérieure (2h) de la partie de raccordement (2) correspond au moins par sections à la surface enveloppe d'un prisme avec la surface de base d'un polygone régulier avec au moins un angle intérieur divergeant de 90°.

2. Système de fixation selon la revendication 1, **caractérisé en ce que** la partie de raccordement (2) peut être reliée de manière solidaire au véhicule (1).

3. Système de fixation selon la revendication 1 ou 2, **caractérisé en ce que** la partie rapportée (5) comprend un dispositif pour la vue indirecte pour un véhicule automobile.

4. Système de fixation selon la revendication 3, **caractérisé en ce que** le dispositif pour la vue indirecte est un rétroviseur de véhicule.

5. Système de fixation selon l'une quelconque des revendications précédentes, **caractérisé en ce que** le moyen de liaison (4) est réalisé comme une vis et le logement (2g) est réalisé comme un filet.

6. Système de fixation selon l'une quelconque des revendications précédentes, **caractérisé en ce que** la surface enveloppe extérieure de la partie de raccordement (2) correspond au moins par sections à la surface enveloppe d'un prisme avec la surface de base d'un hexagone régulier.

7. Système de fixation selon l'une quelconque des revendications précédentes, **caractérisé en ce que** la partie de raccordement (2) est réalisée comme un profilé tubulaire.

8. Système de fixation selon l'une quelconque des revendications précédentes, **caractérisé en ce que** la partie de raccordement (2) est réalisée comme un profilé plein.

9. Véhicule avec au moins un dispositif pour la vue indirecte (5) qui est fixé avec un système de fixation selon l'une quelconque des revendications précédentes, au véhicule (1).
